# EUROPEAN PATENT SPECIFICATION

(11) **EP 1 376 023 B1**
(45) Date of publication and mention of the grant of the patent: **08.11.2006**
(21) Application number: 01917769.0
(22) Date of filing: 30.03.2001
(51) Int. Cl.: F24F 7/08, F24F 12/00, F24F 13/20

(54) **VENTILATOR AND METHOD OF MANUFACTURING THE VENTILATOR**
LÜFTUNGSVORRICHTUNG UND VERFAHREN ZU DESSEN HERSTELLUNG
VENTILATEUR ET SON PROCEDE DE FABRICATION

(43) Date of publication of application: 02.01.2004
(73) Proprietor: DAIKIN INDUSTRIES, LTD., Osaka-shi, Osaka 530-8323 (JP)
(72) Inventor: MATSUGI, Y. c/o Kanaoka Factory, Daikin Ind. Ltd., Sakai-shi, Osaka 591-8511 (JP); IGUCHI, K. c/o Kanaoka Factory, Daikin Ind. Ltd., Sakai-shi, Osaka 591-8511 (JP); KAWAGUCHI, T. c/o Kanaoka Factory, Daikin Ind. Ltd, Sakai-shi, Osaka 591-8511 (JP)
(74) Representative: Laufhütte, Dieter
(86) International application number: PCT/JP2001/002839
(87) International publication number: WO 2002/081977

(56) References cited:
- DE-A- 3 027 447
- JP-A- 5 223 306
- JP-A- 6 026 684
- JP-A- 9 137 984
- JP-U- 5 003 833
- JP-U- 63 181 743
- JP-U- 63 190 838
- PATENT ABSTRACTS OF JAPAN vol. 0120, no. 78 (M-675), 11 March 1988 (1988-03-11) & JP 62 218747 A (MITSUBISHI ELECTRIC CORP), 26 September 1987 (1987-09-26)

## Description

### TECHNICAL FIELD

The present invention relates to a ventilating apparatus which provides ventilation while recovering heat from air being discharged to the outdoors and to its method of manufacture.

### BACKGROUND ART

In recent years ventilating apparatus operable to provide ventilation while recovering heat from air which is discharged outdoors have been used in many cases, with a view to being able to achieve energy saving in air conditioning. Such a type of ventilating apparatus not only simply replaces indoor air with outdoor air, but also effects heat exchange between air which is taken into a room from the outdoors (supply air) and air which is discharged outdoors from the room (exhaust air). After recovery of the heat in the exhaust air, the supply air is delivered indoors.

With the spread of ventilating apparatus of the type described above, there has been demand for innovative manufacture methods for easy assembly of such a type of ventilating apparatus. Besides, there is demand for manufacture methods allowing for not only manufacture ease but also maintenance ease.

From JP-A-9137984 a method of manufacturing a ventilator is known, the ventilator comprising a main casing, a partition member dividing the air supply passage and air exhaust passage inside the main casing, a blower that supplies outdoor air into room via the air supply passage, a blower that exhausts indoor air to the outdoor via the exhaust passage, a heat exchanger provided inside the casing where the heat exchanger is attached after attaching the blowers and the partition member by using a guide rail. However, this ventilating apparatus is complicated to assemble and to maintain.

Accordingly, an object of the present invention is to provide a ventilating apparatus of easy assembly and easy maintenance and its method of manufacture.

### DISCLOSURE OF INVENTION

A ventilating apparatus according to the present invention includes: a unit casing in which a first inlet port for the suction of air from the inside of a room, a first outlet port for the discharge of air to the room inside, a second inlet port for the suction of air from the outside of the room, and a second outlet port for the discharge of air to the room outside are formed; a first zoning member, positioned in the vicinity of either one of the first inlet port and the second outlet port, for dividing the inside of the unit casing into an air-supply passage through which outdoor air is led indoors and an air-exhaust passage through which indoor air is led outdoors; a blower unit for air-exhaust positioned in the vicinity of the other of the first inlet port and the second outlet port; a second zoning member, positioned in the vicinity of either one of the second inlet port and the first outlet port, for dividing the inside of the unit casing into the air-supply passage and the air-exhaust passage; a blower unit for air-supply positioned in the vicinity of the other of the second inlet port and the first outlet port; one or more heat exchanging elements, disposed between the first zoning member and the air-exhaust blower unit and between the second zoning member and the air-supply blower unit, for effecting heat exchange between the outdoor air of the air-supply passage and the indoor air of the air-exhaust passage; and one or more guide rails for positioning and fixing the first zoning member, the second zoning member, the air-supply blower unit, and the air-exhaust blower unit, and for guiding the heat exchanging element to a specified position in the unit casing.

An opening for allowing the heat exchanging element to be inserted along the guide rail may be formed in the unit casing.

Spacer members for securing spaces for the air suction or the air blowoff of the air-supply blower unit and the air-exhaust blower unit may be mounted in the unit casing.

The ventilating apparatus described above may have a passage selecting member including a bypass passage for allowing the indoor air sucked from the fist inlet port to bypass the heat exchanging element and a damper for selecting, as a passage for the indoor air, between a passage passing through the heat exchanging element and the bypass passage.

A method of manufacturing a ventilating apparatus not forming part of the scope of protection of the present invention is a method of manufacturing a ventilating apparatus including a unit casing, zoning members for providing a division into an air-supply passage and an air-exhaust passage in the unit casing, blower units for leading outdoor air indoors through the air-supply passage and for leading indoor air outdoors through the air-exhaust passage, and a heat exchanging element, positioned in the unit casing, for effecting heat exchange between the outdoor air and the indoor air, wherein attachment of the heat exchanging element is carried out after the blower units and the zoning members are attached.

In the ventilating apparatus manufacture method, such arrangement may be made in which electrical wiring of the blower units is carried out prior to attachment of the heat exchanging element and the heat exchanging element is attached by inserting, after a guide rail for guiding the heat exchanging element during attachment and removal is mounted, the heat exchanging element along the guide rail.

A method of manufacturing a ventilating apparatus according to the present invention is a method of manufacturing a ventilating apparatus having a unit casing including a bottom plate, a front sideplate in which a first outlet port for the discharge of air to the inside of a room and a first inlet port for the suction of air from the room inside are formed side by side in a right-left direction, a rear sideplate in which a second inlet port for the suction of air from the outside of the room and a second outlet port for the discharge of air to the room outside are formed side by side in a right-left direction, a left sideplate in which an opening is formed at the center thereof, a lid member for closing the opening in an openable and closable manner, a right sideplate, and a top plate, a blower unit for air-supply so disposed in the vicinity of the first outlet port that air is discharged from the first outlet port, a blower unit for air-exhaust so disposed in the vicinity of the second outlet port that air is discharged from the second outlet port, a first zoning member, disposed in the vicinity of the first inlet port, for dividing the inside of the unit casing so that air sucked from the first inlet port is led to the air-exhaust blower unit while air sucked from the second inlet port is led to the air-supply blower unit, a second zoning member, disposed in the vicinity of the second inlet port, for dividing the inside of the unit casing so that air sucked from the second inlet port is led to the air-supply blower unit while air sucked from the first inlet port is led to the air-exhaust blower unit, a first spacer member interposed between the air-supply blower unit and the left sideplate, a second spacer member interposed between the air-exhaust blower unit and the right sideplate, guide rails which are positioned at the longitudinal center of the bottom plate of the unit casing and at the longitudinal center of the top plate of the unit casing, respectively and which each extend in a right-left direction, a front guide rail which is mounted on the rear of the air-supply blower unit and the first zoning member and which extends in a right-left direction, a rear guide rail which is mounted on the front of the air-exhaust blower unit and the second zoning member and which extends in a right-left direction, a heat exchanging element, detachably mounted on each guide rail so as to be interposed between the air-supply blower unit and the second zoning member and between the air-exhaust blower unit and the first zoning member, for effecting heat exchange between indoor air sucked from the first inlet port and outdoor air sucked from the second inlet port, a passage selecting member including a bypass passage for allowing the indoor air sucked from the fist inlet port to bypass the heat exchanging element and a damper for selecting, as a passage for the indoor air, between a passage passing through the heat exchanging element and the bypass passage, and an electric appliance box positioned outside the unit casing, wherein (a) the bottom plate, the front sideplate, the rear sideplate, the left sideplate, and the right sideplate are assembled together, (b) thereafter, the passage selecting member is mounted, (c) thereafter, the first spacer member and the second spacer member are mounted, (d) thereafter, the air-supply blower unit and the air-exhaust blower unit are mounted, (e) thereafter, the first zoning member and the second zoning member are mounted, (f) thereafter, the guide rail is attached to the bottom plate, while the front guide rail and the rear guide rail are mounted, (g) thereafter, both the blower units and the electric appliance box are connected together by a cable, (h) thereafter, the heat exchanging element is inserted from an opening formed in the left sideplate along each guide rail, and (i) thereafter, the top plate is attached.

As a result of such arrangement, it is possible to obtain a ventilating apparatus of easy assembly and easy maintenance and its method of manufacture. Since the heat exchanging element is attached after the attachment of the blower units and zoning members, this makes it possible to repair and inspect the blower units with ease by previously removing the heat exchanging element during maintenance.

By virtue of the provision of the guide rail for guiding the heat exchanging element, the heat exchanging element can be attached and detached easily by inserting or removing it along the guide rail. Since the guide rail also plays a role of fixing the blower units and zoning members in position, this eliminates the need for fixing means to fixing them, thereby providing a simplified apparatus constitution. Besides, a simplified manufacture method is realized.

### BRIEF DESCRIPTION OF DRAWINGS

Figure **1** is a perspective view depicting an internal constitution of the ventilating apparatus.
Figure **2** is a front view of the blower unit.
Figure **3** is a side view of the blower unit.
Figure **4** is a perspective view of the zoning member.
Figure **5** is an exploded perspective view of the passage selecting member.
Figure **6** is a side view of the heat exchanging element.
Figure **7** is a perspective view of liners of the heat exchanging element.
Figure **8** is a plan view of the guide rail.
Figure **9** is a cross-sectional view of the guide rail.
Figure **10** is a diagram showing some manufacture steps of the ventilating apparatus.
Figure **11** is a diagram showing some manufacture steps of the ventilating apparatus.

### BEST MODE FOR CARRYING OUT THE INVENTION

Hereinafter, an embodiment of the present invention will be described with reference to the accompanying drawings.

### - Constitution Of The Ventilating Apparatus -

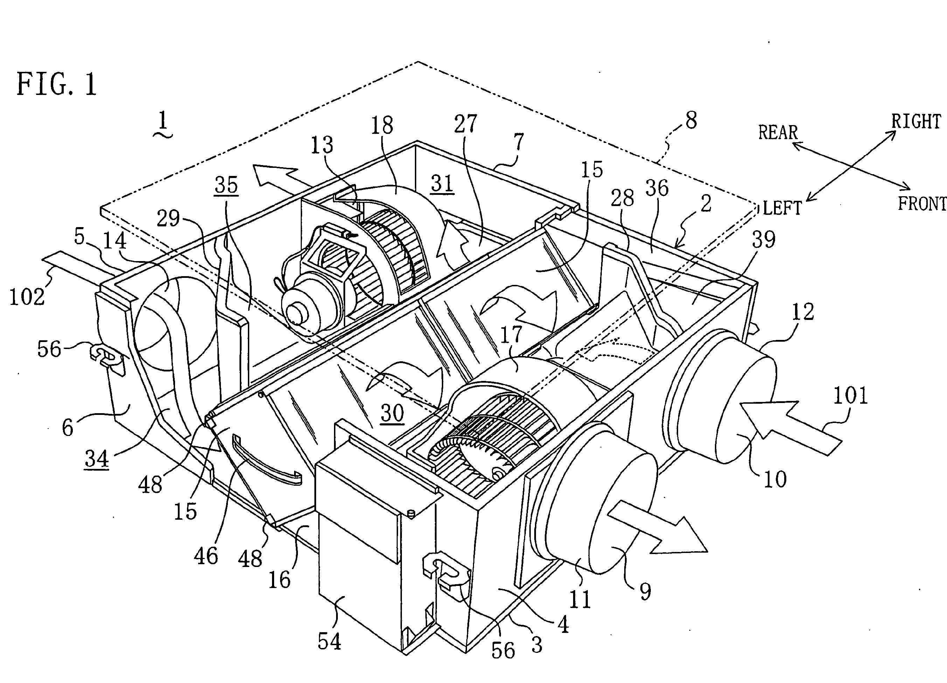

As shown in Figure **1**, the ventilating apparatus **(1)** is a heat recovery type ventilating apparatus operable to effect, by the means of a heat exchanging element **(15)**, heat exchange between air **(101)** recovered from the inside of a room and fresh air **(102)** taken in from the outdoors and to provide ventilation while recovering heat held in the indoor air **(101)**.

A unit casing **(2)** of the ventilating apparatus **(1)** is formed into a rectangular parallelepipedic shape. The unit casing **(2)** is made up of a bottom plate **(3)**, a front sideplate **(4)**, a rear sideplate **(5)**, a left sideplate **(6)**, a right sideplate **(7)**, and a top plate **(8)**. Formed in a left-hand portion of the front sideplate **(4)** is a first outlet port **(9)** for the discharge of the outside air **(102)** to the inside of a room. On the other hand, formed in a right-hand portion of the front sideplate **(4)** is a first inlet port **(10)** for the recovery of air from the room inside. The first outlet port **(9)** and the first inlet port **(10)** are provided with duct adapters **(11, 12)**, respectively, for attachment to ducts (not shown) extending indoors. A second outlet port **(13)** for the discharge of air recovered from the room inside to the outdoors is formed in a right-hand portion of the rear sideplate **(5)**. On the other hand, formed in a left-hand portion of the rear sideplate **(5)** is a second inlet port **(14)** for the introduction of outside air from the outdoors. The second outlet port **(13)** and the second inlet port **(14)** are also provided with duct adapters (not shown), respectively, of the same type as the duct adapters **(11, 12)**. Formed at the center of the left sideplate **(6)** is an opening **(16)** through which heat exchanging elements **(15, 15)** (which will be described later) are inserted.

A blower unit **(17)** for air-supply is mounted in the vicinity of the first outlet port **(9)**. A blower unit **(18)** for air-exhaust is mounted in the vicinity of the second outlet port **(13)**. Since the air-supply blower unit **(17)** and the air-exhaust blower unit **(18)** are identical in structure with each other, only the structure of the air-supply blower unit **(17)** will be described hereinafter and the description of the air-exhaust blower unit **(18)** is omitted.

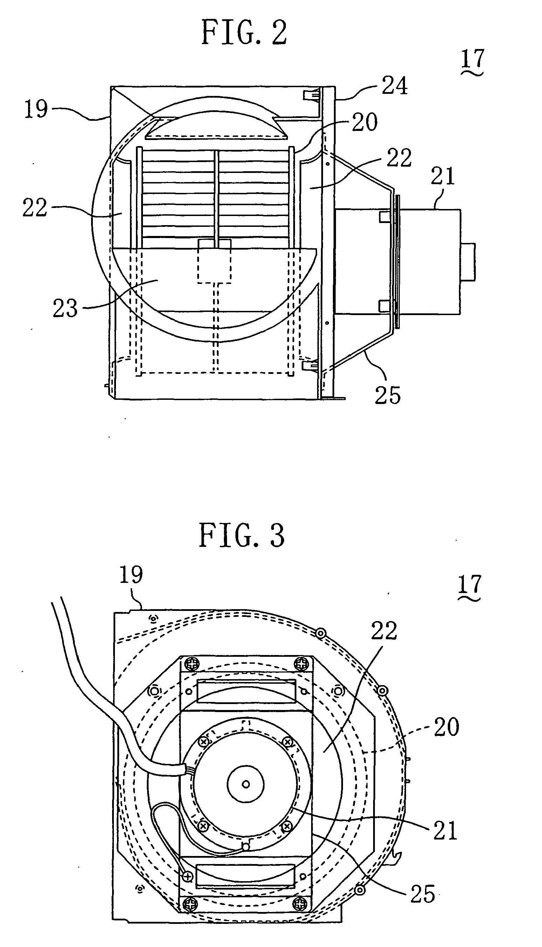

As can be seen from Figures **2** and **3**, the air-supply blower unit **(17)** is implemented by a so-called double suction type sirocco fan. The air-supply blower unit **(17)** includes a fan housing **(19)**, a fan rotor **(20)** housed in the inside of the fan housing **(19)**, and a fan motor **(21)** for driving the fan rotor **(20)**. An air outlet port **(23)** is formed in the front side of the fan housing **(19)**. The left side of the fan housing **(19)** is partially opened and such an opening serves as a suction port **(22)** for the suction of air. On the other hand, the entire right side of the fan housing **(19)** is opened and a partition plate **(24)** is attached to the right side of the fan housing **(19)**. An air suction port **(22)** is formed in the partition plate **(24)**. A mounting base **(25)** with the fan motor **(21)** fixed thereto is attached to the partition plate **(24)**. The fan rotor **(20)** is fixed to the shaft (not shown) of the fan motor **(21)**. Such arrangement allows the fan motor **(21)**, the mounting base **(25)**, and the partition plate **(24)** to be mounted detachably to the fan housing **(19)** in the form of one piece.

As shown in Figure **1**, the air-supply blower unit **(17)** is disposed at a left front portion in the unit casing **(2)** so that the outlet port **(23)** of the fan housing **(19)** and the first outlet port **(9)** of the unit casing **(2)** are in continuous connection. The air-exhaust blower unit **(18)** is disposed at a right rear portion in the unit casing **(2)** so that the outlet port **(23)** of the fan housing **(19)** and the second outlet port **(13)** of the unit casing **(2)** are in continuous connection.

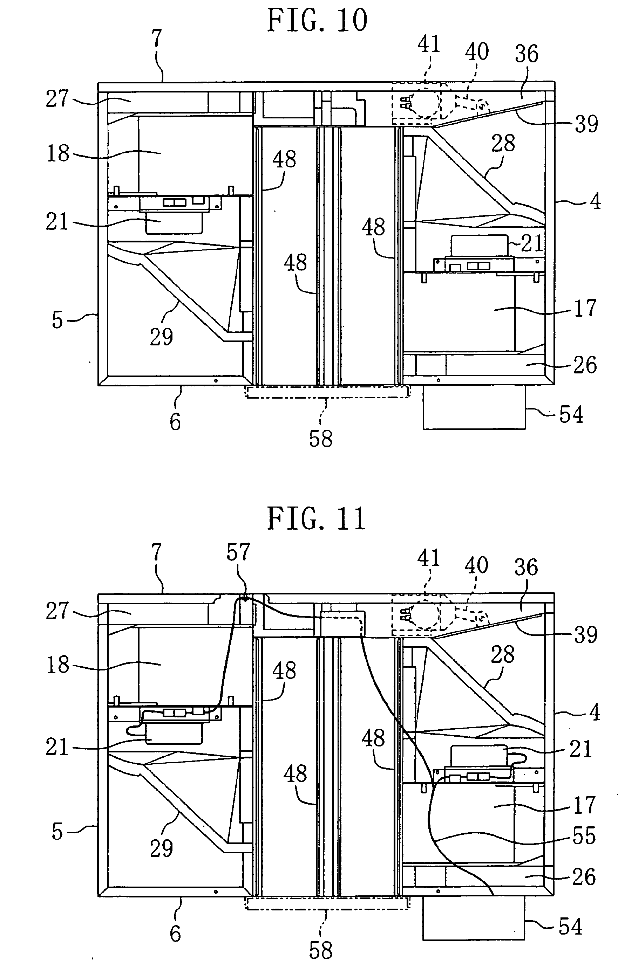

Positioned at a left front corner in the unit casing **(2)** is a first spacer **(26)** (see Figure **10** or Figure **11**) for securing a clearance between the air-supply blower unit **(17)** and the left sideplate **(6)**. The first spacer **(26)** serves to secure an air passage for the suction of air from the suction port **(22)** on the left of the air-supply blower unit **(17)**. Likewise, positioned at a right rear corner of the unit casing **(2)** is a second spacer **(27)** for securing a clearance between the air-exhaust blower unit **(18)** and the right sideplate **(7)**. The second spacer **(27)** servers to secure an air passage for the suction of air from the suction port **(22)** on the right of the air-exhaust blower unit **(18)**.

As shown in Figure **1**, a first zoning member **(28)** is positioned at a right front portion in the unit casing **(2)**. A second zoning member **(29)** is positioned at a left rear portion of the unit casing **(2)**. The fist zoning member **(28)** and the second zoning member **(29)** are members for dividing the inside of the unit casing **(2)** into an air-supply passage **(30)** and an air-exhaust passage **(31)**.

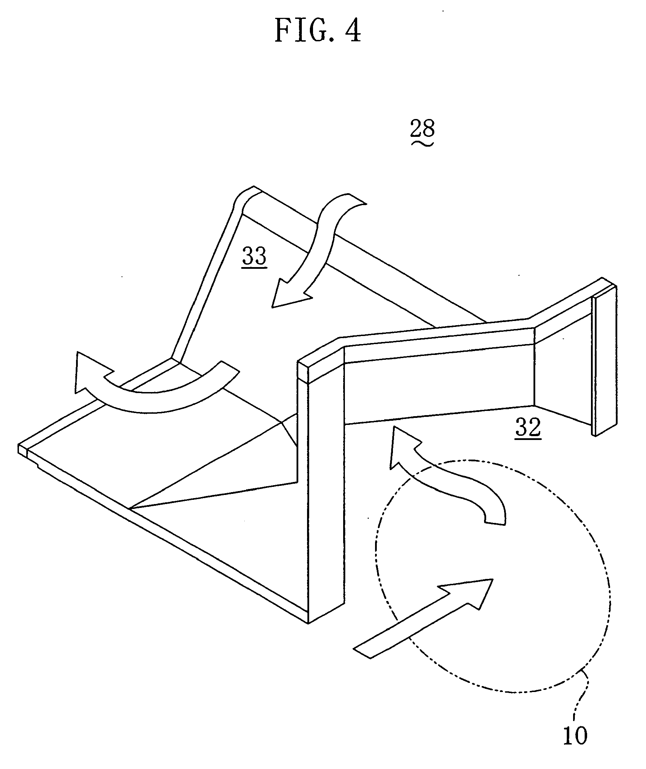

As shown also in Figure **4**, the first zoning member **(28)** provides a division into an air passage **(32)** through which indoor air sucked from the first suction port **(10)** is led to the lower left and an air passage **(33)** through which outside air, after passing through the heat exchanging element **(15)**, is led to the left. The air passage **(32)** is a passage for introducing indoor air into a passage on the air-exhaust side of the heat exchanging element **(15)**, whereas the air passage **(33)** is a passage for leading outside air withdrawn from a passage on the air-supply side of the heat exchanging element **(15)** to the air-supply blower unit **(17)**.

The second zoning member **(29)** has the same constitution as the first zoning member **(28)**. The second zoning member **(29)** provides a division into an air passage **(34)** through which outdoor air sucked from the second suction port **(14)** is led to the air-supply side passage of the heat exchanging element **(15)** and an air passage **(35)** through which indoor air withdrawn from the air-exhaust side passage of the heat exchanging element **(15)** is led to the air-exhaust blower unit **(18)**.

The first zoning member **(28)** and the second zoning member **(29)** are simply fitted in specified positions in the unit casing **(2)**, in other words they are not fixed to the unit casing **(2)** by special fixing means such as a screw.

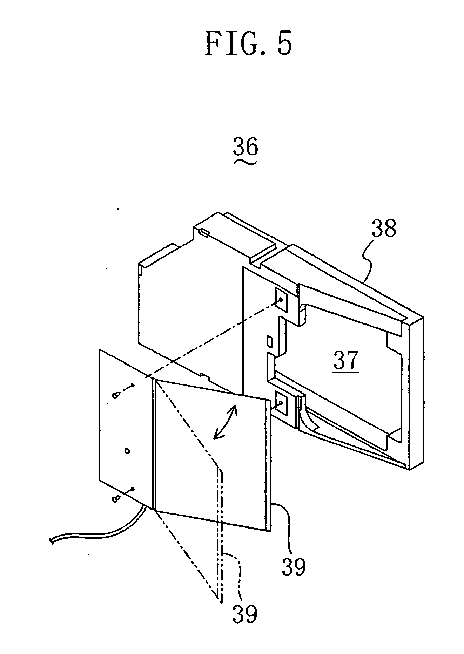

As shown in Figure **1**, disposed at a right front corner in the unit casing **(2)** is a passage selecting member **(36)** for switching passages for air sucked from the first inlet port **(10)**. As shown in Figure **5**, the passage selecting member **(36)** has a main body portion **(38)** in which a bypass passage **(37)** is formed and a damper **(39)** for openably and closably covering the bypass passage **(37)**. The main body portion **(38)** is made of styrene foam. A flow-out port (not shown) of the bypass passage **(37)** is formed in the rear side of the main body portion **(38)**.

A damper arm **(40)** pin-connected to the damper **(39)** and a damper motor **(41)** for expanding and contracting the damper arm **(40)** are formed at the back of the damper **(39)** as shown in Figure **10** or Figure **11** (not shown in Figure **5**). As a result of such arrangement, the damper **(39)** is opened when the damper arm **(40)** is extended by the damper motor **(41)**, whereas the damper **(39)** is closed when the damper arm **(40)** is contracted by the damper motor **(41)**.

As shown in Figure **1**, when the damper **(39)** is placed in the closed state the indoor air **(101)** sucked from the first suction port **(10)** flows through the air passage **(32)** (see Figure **4**), passes through the heat exchanging element **(15)**, and is discharged outdoors. On the other hand, when the damper **(39)** is placed in the opened state the bypass passage **(37)** of the main body portion **(38)** is opened and the air passage **(32)** is closed by the damper **(39)**. And, indoor air sucked from the first suction port **(10)** flows through the bypass passage **(37)**, bypasses the heat exchanging element **(15)**, and is discharged outdoors.

As shown in Figure **1**, positioned at longitudinal central portions in the unit casing **(2)** are the heat exchanging elements **(15, 15)** extending in a right-left direction. Stated another way, the heat exchanging elements **(15, 15)** are disposed between the air-supply blower unit **(17)** and the second zoning member **(29)** and between the first zoning member **(28)** and the air-exhaust blower unit **(18)**, respectively.

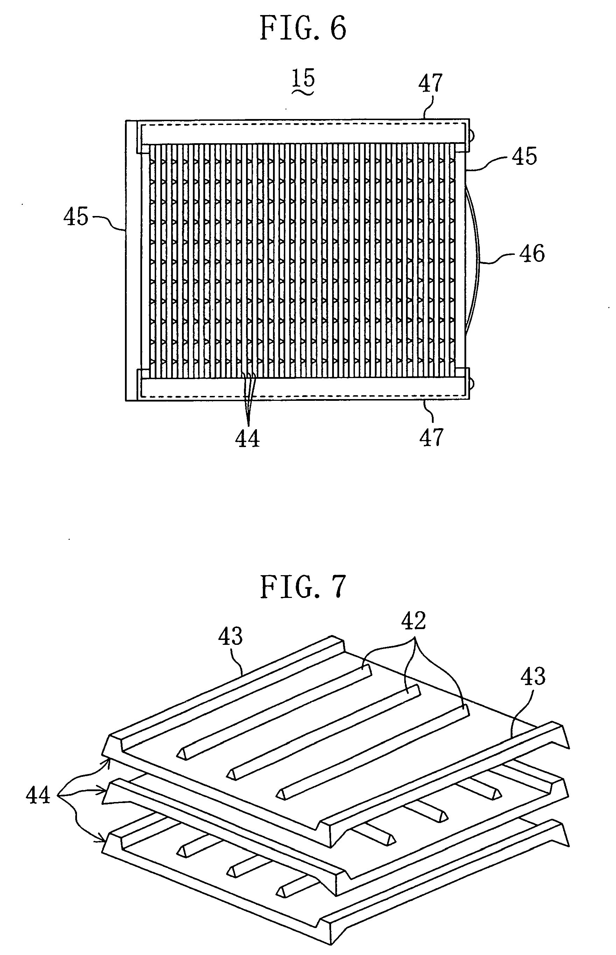

As shown in Figure **6**, the heat exchanging element **(15)** is constituted by a so-called total enthalpy heat exchanger. As shown in Figure **7**, the heat exchanging element **(15)** is formed by lamination of a plurality of liners **(44, 44, ...)** having ribs **(43)** and spacers **(42)** extending in one direction. These liners **(44, 44, ...)** are each made of a plate material of paper of approximately square shape and are laminated together such that the extending direction of the ribs **(43)** and the spacers **(42)** of each liner **(44)** is different from the extending direction of the ribs **(43)** and the spacers **(42)** of the other liner **(44)**. As a result, air-supply passages and air-exhaust passages are alternately defined between each liner **(44, 44, ...)**, whereby heat is transferred between outside air circulating in the air-supply passage and indoor air circulating in the air-exhaust passage through the liner **(44)**.

End face plates **(45, 45)** are mounted on both longitudinal direction (the same direction in which the liners **(44, 44, ...)** are laminated) ends of the heat exchanging element **(15)**. One of the end face plates **(45, 45)** is provided with a handle **(46)**. Attached to the four corners of the laminated liners **(44, 44, ...)** are frame columns **(47)** extending in the longitudinal direction of the heat exchanging element **(15)**. The liners **(44, 44, ...)** are fixed by the end face plates **(45, 45)** and the four frame columns **(47)**.

A guide rail **(48)** extending in a right-left direction is attached to a longitudinal central portion of the bottom plate **(3)** of the unit casing **(2)**. Further, another guide rail **(48)** extending in a right-left direction is also attached to a longitudinal central portion of the top plate **(8)** (not shown). Besides, guide rails **(48, 48)** are mounted on the rear of the air-supply blower unit **(17)** and the first zoning member **(28)** and on the front of the air-exhaust blower unit **(18)** and the second zoning member **(29)**. These guide rails **(48)** guide insertion and removal of the heat exchanging elements **(15)** with respect to the unit casing **(2)**. Further, as will be described later, these guide rails **(48)** press the blower units **(17, 18)** and the zoning members **(28, 29)** toward the front or rear so that they are fixed in position. The guide rails **(48)** also play a role of securing an air passage between themselves and the heat exchanging elements **(15)**.

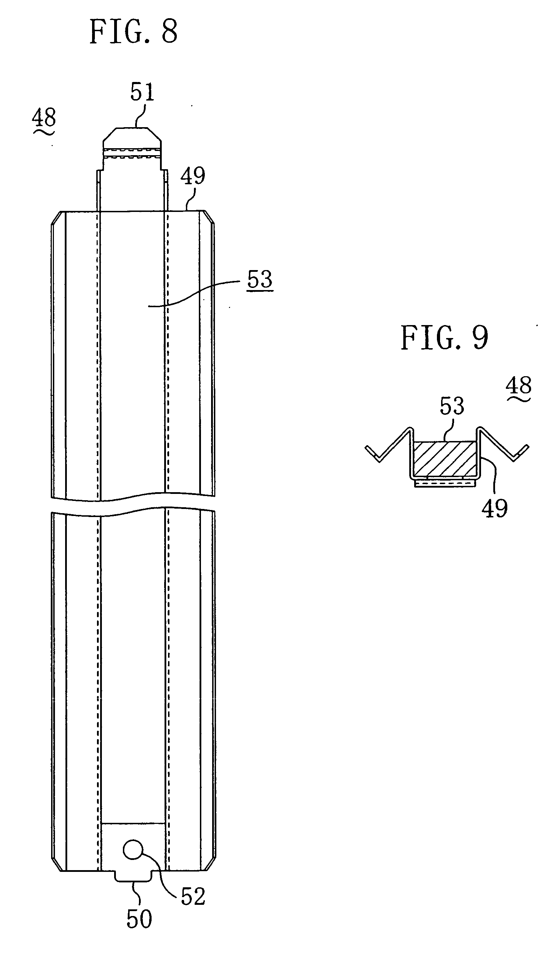

As shown in Figures **8** and **9**, the guide rail **(48)** includes a rail main body portion **(49)** with a recessed portion for supporting therein the frame column **(47)** of the heat exchanging element **(15)**, a fixation portion **(50)** provided at one longitudinal end of the rail main body portion **(49)**, and a claw portion **(51)** provided at the other longitudinal end. A hole **(52)**, through which fixing means such as a screw is passed, is formed in the fixation portion **(50)**. The claw portion **(51)** is formed in the form of a thin plate projecting in the longitudinal direction of the rail main body portion **(49)**. A seal material **(53)** is embedded in the recessed portion of the rail main body portion **(49)**. The seal material **(53)** is made of a material which is readily deformable upon receiving pressing force by the frame column **(47)** of the heat exchanging element **(15)**, so that the seal material **(53)** becomes adhered to the frame column **(47)** thereby preventing leakage of air.

As shown in Figure **1**, an electric appliance box **(54)**, in which electric appliances are housed, is mounted on the front of the left sideplate **(6)** of the unit casing **(2)**. Further, an introduction port (not shown), through which a cable **(55)** (not shown in Figure **1**, but see Figure **11** in which although the cable **(55)** is represented by a single line it is actually made up of a plurality of cables) connected to the air-supply blower unit **(17)**, to the air-exhaust blower unit **(18)**, and to the damper motor **(41)** is inserted, is formed through the front of the left sideplate **(6)**. The cable **(55)** is introduced into the inside of the electric appliance box **(54)** through the introduction port.

The air-supply passage and the air-exhaust passage of the heat exchanging element **(15)** are provided, in their fronts thereof, with filters, respectively (not shown). Insulating material (not shown) is affixed to a part of the interior wall of the unit casing **(2)**. Attached to the left sideplate **(6)** and to the right sideplate **(7)** are metal hangers **(56)**.

During ventilation, both the blower units **(17, 18)** are activated and the indoor air **(101)** is introduced into the unit casing **(2)** from the first inlet port **(10)**. The indoor air **(101)**, after passing through the air-exhaust passage of the heat exchanging element **(15)**, is discharged outdoors from the second outlet port **(13)**. Meanwhile, the fresh outside air **(102)** is introduced from the second inlet port **(14)**. The outside air **(102)**, after passing through the air-supply passage of the heat exchanging element **(15)**, is delivered indoors through the first outlet port **(9)**. At this time, since the outside air **(102)** and the indoor air **(101)** exchange heat in the heat exchanging element **(15)**, the outside air **(102)**, after recovering heat held in the indoor air **(101)**, is supplied indoors. That is, during the summer outdoor warm outside air robs cold from the indoor air to change to cool air and is delivered indoors. On the other hand, during the winter outdoor cold outside air robs heat from the indoor air to change to warm air and is delivered indoors.

In the case energy saving can be achieved by introducing outdoor air without having to subject it to a heat exchange process (for example when the outdoor temperature is lower than an indoor set temperature during the cooling), the damper **(39)** of the passage selecting member **(36)** is opened and indoor air sucked from the first inlet port **(10)** flows through the bypass passage **(37)** and is discharged outdoors from the second outlet port **(13)**. In such a case, no heat exchange takes place between the outside air and indoor air.

### - Method Of Manufacturing The Ventilating Apparatus -

Next, a process of manufacturing the ventilating apparatus **(1)** will be described below.

First, the bottom plate **(3)** is prepared. Thermal insulation is affixed to specified areas of the bottom plate **(3)**. Then the front sideplate **(4)**, the rear sideplate **(5)**, the left sideplate **(6)**, and the right sideplate **(7)** are assembled to the bottom plate **(3)**. As a result of such assembly, the unit casing **(2)** without the top plate **(8)** is obtained.

Next, the passage selecting member **(36)**, which has been pre-assembled or assembled concurrently with the foregoing work, is attached to a right front portion in the unit casing **(2)**.

Subsequently, the first spacer **(26)** and the second spacer **(27)** are disposed at a left front portion and at a right rear portion in the unit casing **(2)** respectively in the unit casing **(2)**.

Next, the air-supply blower unit **(17)** and the air-exhaust blower unit **(18)**, which have been pre-assembled or assembled concurrently with the foregoing work, are attached to a left front portion and to a right rear portion respectively in the unit casing **(2)**.

Subsequently, the first zoning member **(28)** is placed into between the air-supply blower unit **(17)** and the passage selecting member **(36)**, whereas the second zoning member **(29)** is placed into between the air-exhaust blower unit **(18)** and the left sideplate **(6)**.

Thereafter, attachment of each guide rail **(48)** is carried out in the following way (see Figure **10**). With the bottom plate **(3)**, the claw portion **(51)** of a guide rail **(48)** is either inserted in a clearance defined between the passage selecting member **(36)** and the bottom plate **(3)** or pierced into the bottom of the passage selecting member **(36)** for fixing one end of the guide rail **(48)**. And, with such a state remained intact, the guide rail **(48)** is positioned on the bottom plate **(3)** so that the fixation hole **(52)** of the guide rail **(48)** and a screw hole or the like formed in the bottom plate **(3)** (not shown) are positioned one over the other. Then, fixing means such as a screw is inserted through the hole **(52)** of the guide rail **(48)** for fixing the other end of the guide rail **(48)** to the bottom plate **(3)**.

Subsequently, another guide rail **(48)** is prepared and its claw portion **(51)** is pierced into a longitudinal central portion of the main body portion **(38)** and fixed there. And, while bringing the guide rail **(48)** into contact with the first zoning member **(28)** and with the air-supply blower unit **(17)** so that the first zoning member **(28)** and the air-supply blower unit **(17)** are pressed forward by the guide rail **(48)**, the fixation portion **(50)** of the guide rail **(48)** is fixed to a front edge portion of the opening **(16)** in the left sideplate **(6)**. Further, still another guide rail **(48)** is prepared and its claw portion **(51)** is pierced into a rear portion of the main body portion **(38)** and fixed there. And, with the air-supply blower unit **(18)** and the second zoning member **(29)** pressed backward by the guide rail **(48)**, the fixation portion **(50)** of the guide rail **(48)** is fixed to a rear edge portion of the opening **(16)** in the left sideplate **(6)**. At the time of fixing the fixation portions **(50)** of the guide rails **(48, 48)**, fixing means such as screw is used, like the guide rail **(48)** of the bottom plate **(3)**.

Next, as shown in Figure **11**, electric wiring of the fan motors **(21)** of the air-supply blower unit **(17)** and air-exhaust blower unit **(18)** and electric wiring of the damper motor **(41)** are carried out. More specifically, the cable **(55)** formed by bundling an adequate number of cables (note that a cable for the damper motor **(41)** is not diagrammed) is fixed at several points with for example clamp members **(57)** and disposed so that when the heat exchanging element **(15)** is later inserted the cable **(55)** and the heat exchanging element **(15)** are prevented from interfering with each other. And, the cable **(55)** is introduced into the electric appliance box **(54)** and each cable is electrically wire-bound.

Next, positioning is carried out so that the frame columns **(47)** of the heat exchanging element **(15)** are placed into the recessed portions of each guide rail **(48)** and thereafter the heat exchanging element **(15)** is inserted from the opening **(16)** of the left sideplate **(6)** along the guide rail **(48)**. In this way, the two heat exchanging elements **(15, 15)** are disposed one after the other.

Subsequently, the top plate **(8)**, to which the guide rail **(48)** has been pre-attached or attached concurrently with the aforesaid work, is mounted on the front sideplate **(4)**, the rear sideplate **(5)**, the left sideplate **(6)**, and the right sideplate **(7)**.

Thereafter, after thermal insulation (not shown) is affixed, filters are inserted on the front sides of the air-supply passage and the air-exhaust passage of the heat exchanging element **(15)** from the opening **(16)** of the left sideplate **(6)**.

Next, the first outlet port **(9)**, the first inlet port **(10)**, the second outlet port **(13)**, and the second inlet port **(14)** are provided with the duct adapters **(11, 12)**. The metal hangers **(56)** are attached to the left sideplate **(6)** and to the right sideplate **(7)**.

Subsequently, the air-supply blower unit **(17)** and the others are subjected to insulation test and withstand voltage test, and to running test. Next, after a nameplate is affixed, the inside of the unit casing **(2)** is cleaned. And, the opening **(16)** of the left sideplate **(6)** is closed with the openable/closable cover **(58)** (see Figure **10** or Figure **11)**. Thereafter, final examinations such as visual inspection are carried out and then packaging is performed after inspection acceptance.

As described above, in accordance with the manufacture method of the present embodiment, the assembly of the ventilating apparatus **(1)** can be carried out with ease and speed.

Besides, even after the installation of the ventilating apparatus **(1)**, the maintenance of the air-supply blower unit **(17)** and the others can be done easily by uncovering the cover of the opening **(16)** of the left sideplate **(6)** and removing the heat exchanging element **(15)** through the opening **(16)** along the guide rail **(48)**. That is, in accordance with the present embodiment, the maintenance of the ventilating apparatus **(1)** is also easy to carry out.

## Claims

1. A ventilating apparatus comprising:
a unit casing **(2)** in which a first inlet port **(10)** for the suction of air from the inside of a room, a first outlet port **(9)** for the discharge of air to said room inside, a second inlet port **(14)** for the suction of air from the outside of said room, and a second outlet port **(13)** for the discharge of air to said room outside are formed;
a first zoning member **(28)**, positioned in the vicinity of either one of said first inlet port **(10)** and said second outlet port **(13)**, for dividing the inside of said unit casing **(2)** into an air-supply passage **(30)** through which outdoor air **(102)** is led indoors and an air-exhaust passage **(31)** through which indoor air **(101)** is led outdoors;
a blower unit **(18)** for air-exhaust positioned in the vicinity of the other of said first inlet port **(10)** and said second outlet port **(13)**;
a second zoning member **(29)**, positioned in the vicinity of either one of said second inlet port **(14)** and said first outlet port **(9)**, for dividing the inside of said unit casing **(2)** into said air-supply passage **(30)** and said air-exhaust passage **(31)**;
a blower unit **(17)** for air-supply positioned in the vicinity of the other of said second inlet port **(14)** and said first outlet port **(9)**;
one or more heat exchanging elements **(15)**, disposed between said first zoning member **(28)** and said air-exhaust blower unit **(18)** and between said second zoning member **(29)** and said air-supply blower unit **(17)**, for effecting heat exchange between said outdoor air **(102)** of said air-supply passage **(30)** and said indoor air **(101)** of the air-exhaust passage **(31)**; and
one or more guide rails **(48)** for positioning and fixing said first zoning member **(28)**, said second zoning member **(29)**, said air-supply blower unit **(17)**, and said air-exhaust blower unit **(18)**, and for guiding said heat exchanging element **(15)** to a specified position in said unit casing **(2)**.

2. The ventilating apparatus of claim 1,
wherein an opening **(16)** for allowing said heat exchanging element **(15)** to be inserted along said guide rail **(48)** is formed in said unit casing **(2)**.

3. The ventilating apparatus of claim 1,
wherein spacer members **(26, 27)** for securing spaces for the air suction or the air blowoff of said air-supply blower unit **(17)** and said air-exhaust blower unit **(18)** are mounted in said unit casing **(2)**.

4. The ventilating apparatus of claim 1 further comprising:
a passage selecting member **(36)** including a bypass passage **(37)** for allowing said indoor air **(101)** sucked from said fist inlet port **(10)** to bypass said heat exchanging element **(15)** and a damper **(39)** for selecting, as a passage for said indoor air **(101)**, between a passage **(32)** passing through said heat exchanging element **(15)** and said bypass passage **(37)**.

5. A method of manufacturing a ventilating apparatus (1),
said ventilating apparatus **(1)** comprising:
a unit casing **(2)** including: a bottom plate **(3)**; a front sideplate **(4)** in which a first outlet port **(9)** for the discharge of air to the inside of a room and a first inlet port **(10)** for the suction of air from said room inside are formed side by side in a right-left direction; a rear sideplate **(5)** in which a second inlet port **(14)** for the suction of air from the outside of said room and a second outlet port **(13)** for the discharge of air to said room outside are formed side by side in a right-left direction; a left sideplate **(6)** in which an opening **(16)** is formed at the center thereof; a lid member **(58)** for closing said opening **(16)** in an openable and closable manner; a right sideplate **(7)**; and a top plate **(8)**;
a blower unit **(17)** for air-supply so disposed in the vicinity of said first outlet port **(9)** that air is discharged from said first outlet port **(9)**;
a blower unit **(18)** for air-exhaust so disposed in the vicinity of said second outlet port **(13)** that air is discharged from said second outlet port **(13)**;
a first zoning member **(28)**, disposed in the vicinity of said first inlet port **(10)**, for dividing the inside of said unit casing **(2)** so that air sucked from said first inlet port **(10)** is led to said air-exhaust blower unit **(18)** while air sucked from said second inlet port **(14)** is led to said air-supply blower unit **(17)**;
a second zoning member **(29)**, disposed in the vicinity of said second inlet port **(14)**, for dividing the inside of said unit casing **(2)** so that air sucked from said second inlet port **(14)** is led to said air-supply blower unit **(17)** while air sucked from said first inlet port **(10)** is led to said air-exhaust blower unit **(18)**;
a first spacer member **(26)** interposed between said air-supply blower unit **(17)** and said left sideplate **(6)**;
a second spacer member **(27)** interposed between said air-exhaust blower unit **(18)** and said right sideplate **(7)**;
guide rails **(48, 48)** which are positioned at the longitudinal center of said bottom plate **(3)** of said unit casing **(2)** and at the longitudinal center of said top plate **(8)** of said unit casing **(2)**, respectively and which each extend in a right-left direction ;
a front guide rail **(48)** which is mounted on the rear of said air-supply blower unit **(17)** and said first zoning member **(28)** and which extends in a right-left direction;
a rear guide rail **(48)** which is mounted on the front of said air-exhaust blower unit **(18)** and said second zoning member **(29)** and which extends in a right-left direction;
a heat exchanging element **(15)**, detachably mounted on each guide rail **(48, 48)** so as to be interposed between said air-supply blower unit **(17)** and said second zoning member **(29)** and between said air-exhaust blower unit **(18)** and said first zoning member **(28)**, for effecting heat exchange between indoor air **(101)** sucked from said first inlet port **(10)** and outdoor air **(102)** sucked from said second inlet port **(14)**;
a passage selecting member **(36)** including a bypass passage **(37)** for allowing said indoor air **(101)** sucked from said fist inlet port **(10)** to bypass said heat exchanging element **(15)** and a damper **(39)** for selecting, as a passage for said indoor air **(101)**, between a passage **(32)** passing through said heat exchanging element **(15)** and said bypass passage **(37)**; and
an electric appliance box **(54)** positioned outside said unit casing **(2)**;
wherein in said ventilating apparatus manufacture method:
said bottom plate **(3)**, said front sideplate **(4)**, said rear sideplate **(5)**, said left sideplate **(6)**, and said right sideplate **(7)** are assembled together;
thereafter, said passage selecting member **(36)** is mounted;
thereafter, said first spacer member **(26)** and said second spacer member **(27)** are mounted;
thereafter, said air-supply blower unit **(17)** and said air-exhaust blower unit **(18)** are mounted;
thereafter, said first zoning member **(28)** and said second zoning member **(29)** are mounted;
thereafter, said guide rail **(48)** is attached to said bottom plate **(3)**, while said front guide rail **(48)** and said rear guide rail **(48)** are mounted;
thereafter, both said blower units **(17, 18)** and said electric appliance box **(54)** are connected together by a cable **(55)**;
thereafter, said heat exchanging element **(15)** is inserted from an opening **(16)** formed in said left sideplate **(6)** along each guide rail **(48)**; and
thereafter, said top plate **(8)** is attached.

## Patentansprüche

1. Lüftungsvorrichtung mit:
einem Gerätegehäuse (2), in dem ein erster Einlassstutzen (10) zum Ansaugen von Luft aus dem Inneren eines Raums, ein erster Auslassstutzen (9) zum Ausstoßen von Luft an das Rauminnere, einer zweiter Einlassstutzen (14) zum Ansaugen von Luft von außerhalb des Raums und ein zweiter Auslassstutzen (13) zum Ausstoßen von Luft an den Außenraum ausgebildet sind;
einem ersten Zonenbildungselement (28), das in der Nähe eines des ersten Einlassstutzens (10) und des zweiten Auslassstutzens (13) angeordnet ist, zum Unterteilen des Inneren des Gerätegehäuses (2) in einen Luftzufuhrdurchlass (30), durch den Außenluft (102) nach innen geführt wird, und einen Luftablassdurchlass (31), durch den Innenraumluft (101) nach außen geführt wird;
einer Gebläseeinrichtung (18) für Luftablassen, die in der Nähe des anderen des ersten Einlassstutzens (10) und des zweiten Auslassstutzens (13) angeordnet ist;
einem zweiten Zonenbildungselement (29), das in der Nähe des anderen des zweiten Einlassstutzens (14) und des ersten Auslassstutzens (9) angeordnet ist, zum Unterteilen des Inneren des Gerätegehäuses (2) in den Luftzufuhrdurchlass (30) und den Luftablassdurchlass (31);
einer Gebläseeinrichtung (17) für Luftzufuhr, die in der Nähe des anderen des zweiten Einlassstutzens (14) und des ersten Auslassstutzens (9) angeordnet ist;
einem oder mehreren Wärmetauschelementen (15), die zwischen dem ersten Zonenbildungselement (28) und der Luftablass-Gebläseeinrichtung (18) sowie zwischen dem zweiten Zonenbildungselement (29) und der Luftzufuhr-Gebläseeinrichtung (17) angeordnet sind, zum Bewirken von Wärmetausch zwischen der Außenluft (102) des Luftzufuhrdurchlasses (30) und der Innenraumluft (101) des Luftablassdurchlasses (31) ; und
einer oder mehreren Führungsschienen (48) zum Positionieren und Befestigen des ersten Zonenbildungselements (28), des zweiten Zonenbildungselements (29), der Luftzufuhr-Gebläseeinrichtung (17) und der Luftablass-Gebläseeinrichtung (18) und zum Führen des Wärmetauschelements (15) zu einer festgelegten Position in dem Gerätegehäuse (2).

2. Lüftungsvorrichtung nach Anspruch 1, **dadurch gekennzeichnet, dass** in dem Gerätegehäuse (2) eine Öffnung zum Ermöglichen des Einsetzens des Wärmetauschelements (15) entlang der Führungsschiene (48) ausgebildet ist.

3. Lüftungsvorrichtung nach Anspruch 1, **dadurch gekennzeichnet, dass** in dem Gerätegehäuse (2) Abstandshalterelemente (26, 27) zum Sicherstellen von Abständen für das Luftansaugen bzw. das Luftausblasen der Luftzufuhr-Gebläseeinrichtung (17) und der Luftablass-Gebläseeinrichtung (18) eingebaut sind.

4. Lüftungsvorrichtung nach Anspruch 1, welche weiterhin umfasst:
ein Durchlass wählendes Element (36) mit einem Bypass-Durchlass (37) zum Ermöglichen des Ansaugens der Innenraumluft (101) von dem ersten Einlassstutzen (10) zum Umgehen des Wärmetauschelements (15) und eine Klappe (39) zum Wählen zwischen einem durch das Wärmetauschelement (15) tretenden Durchlass (32) und dem Bypass-Durchlass (37) als Durchlass für die Innenraumluft (101).

5. Verfahren zum Herstellen einer Lüftungsvorrichtung (1), wobei die Lüftungsvorrichtung (1) umfasst:
ein Gerätegehäuse (2) mit: einer Bodenplatte (3); einer vorderen Seitenplatte (4), in der ein erster Auslassstutzen (9) für das Ausstoßen von Luft an das Innere eines Raums und ein erster Einlassstutzen (10) für das Ansaugen von Luft aus dem Rauminneren Seite an Seite in einer Richtung von rechts nach links ausgebildet sind; einer hinteren Seitenplatte (5), in der ein zweiter Auslassstutzen (14) für das Ansaugen von Luft von außerhalb des Raums und ein zweiter Auslassstutzen (13) für das Ausstoßen von Luft an den Außenraum Seite an Seite in einer Richtung von rechts nach links ausgebildet sind; einer linken Seitenplatte (6), in der eine Öffnung (16) in der Mitte derselben ausgebildet ist; einem Deckelelement (58) zum Schließen der Öffnung (16) in einer zu öffnenden und zu verschließenden Weise; einer rechten Seitenplatte (7); und einer oberen Platte (8);
eine Gebläseeinrichtung (17) zur Luftzufuhr, die so in der Nähe des ersten Auslassstutzens (9) angeordnet ist, dass Luft von dem ersten Auslassstutzen (9) ausgestoßen wird;
eine Gebläseeinrichtung (18) zum Ausstoßen von Luft, die so in der Nähe des zweiten Auslassstutzens (13) angeordnet ist, dass Luft von dem zweiten Auslassstutzen (13) ausgestoßen wird;
ein erstes Zonenbildungselement (28), das in der Nähe des ersten Einlassstutzens (10) angeordnet ist, zum Unterteilen des Inneren des Gerätegehäuses (2), so dass von dem ersten Einlassstutzen (10) angesaugte Luft der Luftablass-Gebläseeinrichtung (18) zugeführt wird, während von dem zweiten Einlassstutzen (14) angesaugte Luft der Luftzufuhr-Gebläseeinrichtung (17) zugeführt wird;
ein zweites Zonenbildungselement (29), das in der Nähe des zweiten Einlassstutzens (14) angeordnet ist, zum Unterteilen des Inneren des Gerätegehäuses (2), so dass von dem zweiten Einlassstutzen (14) angesaugte Luft der Luftzufuhr-Gebläseeinrichtung (17) zugeführt wird, während von dem ersten Einlassstutzen (10) angesaugte Luft der Luftablass-Gebläseeinrichtung (18) zugeführt wird;
ein zwischen der Luftzufuhr-Gebläseeinrichtung (17) und der linken Seitenplatte (6) dazwischen gesetztes erstes Abstandshalterelement (26);
ein zwischen der Luftablass-Gebläseeinrichtung (18) und der rechten Seitenplatte (7) dazwischen gesetztes zweites Abstandshalterelement (27);
Führungsschienen (48, 48), die an der Mittellänge der Bodenplatte (3) des Gerätegehäuses (2) bzw. an der Mittellänge der oberen Platte (8) des Gerätegehäuses (2) positioniert sind und die jeweils in einer Richtung von rechts nach links verlaufen;
eine vordere Führungsschiene (48), die an dem hinteren Teil der Luftzufuhr-Gebläseeinrichtung (17) und dem ersten Zonenbildungselement (28) angebracht ist und sich in einer Richtung von rechts nach links erstreckt;
eine hintere Führungsschiene (48), die an dem vorderen Teil der Luftablass-Gebläseeinrichtung (18) und dem zweiten Zonenbildungselement (29) angebracht ist und sich in einer Richtung von rechts nach links erstreckt;
ein Wärmetauschelement (15), das an jeder Führungsschiene (48, 48) lösbar so angebracht ist, dass es zwischen der Luftzufuhr-Gebläseeinrichtung (17) und dem zweiten Zonenbildungselement (29) und zwischen der Luftablass-Gebläseeinrichtung (18) und dem ersten Zonenbildungselement (28) dazwischen gesetzt ist, zum Bewirken von Wärmetausch zwischen von dem ersten Einlassstutzen (10) angesaugter Innenraumluft (101) und von dem zweiten Einlassstutzen (14) angesaugter Außenluft (102);
ein Durchlass wählendes Element (36) mit einem Bypass-Durchlass (37) zum Ermöglichen des Ansaugens der Innenraumluft (101) von dem ersten Einlassstutzen (10) zum Umgehen des Wärmetauschelements (15) und eine Klappe (39) zum Wählen zwischen einem durch das Wärmetauschelement (15) tretenden Durchlass (32) und dem Bypass-Durchlass (37) als Durchlass für die Innenraumluft (101); und
einen außerhalb des Gerätegehäuses (2) positionierten Elektrogerätkasten (54);
wobei bei dem Lüftungsvorrichtungsherstellungsverfahren:
die Bodenplatte (3), die vordere Seitenplatte (4), die hintere Seitenplatte (5), die linke Seitenplatte (6) und die rechte Seitenplatte (7) zusammengebaut werden;
danach das den Durchlass wählende Element (36) angebracht wird;
danach das erste Abstandshalterelement (26) und das zweite Abstandshalterelement (27) angebracht werden;
danach die Luftzufuhr-Gebläseeinrichtung (17) und die Luftablass-Gebläseeinrichtung (18) angebracht werden;
danach das erste Zonenbildungselement (28) und das zweite Zonenbildungselement (29) angebracht werden;
danach die Führungsschiene (48) an der Bodenplatte (3) befestigt wird, während die vordere Führungsschiene (48) und die hintere Führungsschiene (48) angebracht werden;
danach beide Gebläseeinrichtungen (17, 18) und der Elektrogerätkasten (54) durch ein Kabel (55) miteinander verbunden werden;
danach das Wärmetauschelement (15) von einer in der linken Seitenplatte (6) ausgebildeten Öffnung (16) entlang jeder Führungsschiene (48) eingesetzt wird; und
danach die obere Platte (8) angebracht wird.

## Revendications

1. Appareil de ventilation comprenant :
un boîtier d'unité (2) dans lequel un premier orifice d'admission (10) pour l'aspiration de l'air de l'intérieur d'une pièce, un premier orifice de sortie (9) pour l'évacuation de l'air vers ledit intérieur de la pièce, un deuxième orifice d'admission (14) pour l'aspiration de l'air de l'extérieur de ladite pièce et un deuxième orifice de sortie (13) pour l'évacuation de l'air vers l'extérieur précité de la pièce sont formés ;
un premier élément de zonage (28) positionné au voisinage de l'un quelconque parmi ledit premier orifice d'admission (10) et ledit deuxième orifice de sortie (13), pour diviser l'intérieur dudit boîtier d'unité (2) en un passage d'amenée d'air (30) à travers lequel l'air extérieur (102) est mené vers l'intérieur, et un passage d'évacuation d'air (31) à travers lequel l'air intérieur (101) est mené vers l'extérieur ;
une unité de soufflage (18) pour l'air d'évacuation positionnée au voisinage de l'autre parmi ledit premier orifice d'admission (10) et ledit deuxième orifice d'évacuation (13) ;
un deuxième élément de zonage (29), positionné au voisinage de l'un quelconque parmi ledit deuxième orifice d'admission (14) et ledit premier orifice de sortie (9) pour diviser l'intérieur dudit boîtier d'unité (2) en passage d'amenée d'air précité (30) et en passage d'évacuation d'air précité (31) ;
une unité de soufflage (17) pour l'amenée d'air positionnée au voisinage de l'autre parmi ledit deuxième orifice d'admission (14) et ledit premier orifice de sortie (9) ;
un ou plusieurs éléments d'échange de chaleur (15), disposés entre ledit premier élément de zonage (28) et ladite unité de soufflage d'air d'évacuation (18) et entre ledit deuxième élément de zonage (29) et ladite unité de soufflage d'air d'amenée (17), pour effectuer un échange de chaleur entre l'air extérieur précité (102) dudit passage d'amenée d'air (30) et ledit air intérieur (101) du passage d'évacuation d'air (31) ; et
un ou plusieurs rails de guidage (48) pour positionner et fixer ledit premier élément de zonage (28), ledit deuxième élément de zonage (29), ladite unité de soufflage d'amenée d'air (17) et ladite unité de soufflage d'évacuation d'air (18), et pour guider ledit élément d'échange de chaleur (15) à une position spécifiée dans ledit boîtier d'unité (2).

2. Appareil de ventilation selon la revendication 1, où une ouverture (16) pour permettre l'insertion dudit élément d'échange de chaleur (15) le long dudit rail de guidage (48) est formé dans ledit boîtier d'unité (2).

3. Appareil de ventilation selon la revendication 1, où des éléments d'écartement (26, 27) pour assurer des espaces pour l'aspiration d'air ou pour le soufflage de l'air de ladite unité de soufflage (17) de l'air d'amenée et de ladite unité de soufflage (18) de l'air d'évacuation sont installées dans ladite unité de boîtier (2).

4. Appareil de ventilation selon la revendication 1, comprenant en outre :
un élément de sélection de passage (36) comprenant un passage de contournement (37) pour permettre audit air intérieur (101) aspiré dudit premier orifice d'admission (10) à contourner ledit élément d'échange de chaleur (15), et un amortisseur (39) pour sélectionner, comme passage pour ledit air intérieur (101), entre un passage (32) passant à travers ledit élément d'échange de chaleur (15) et ledit passage de contournement (37).

5. Procédé de fabrication d'un appareil de ventilation (1), ledit appareil de ventilation (1) comprenant :
un boîtier d'unité (2) incluant : une plaque de fond (3) ; une plaque latérale frontale (4) dans laquelle un premier orifice de sortie (9) pour évacuer l'air vers l'intérieur d'une pièce et un premier orifice d'admission (10) pour l'aspiration de l'air dudit intérieur de la pièce sont formés côte à côte dans une direction droite-gauche ; une plaque latérale arrière (5) dans laquelle un deuxième orifice d'admission (14) pour l'aspiration de l'air de l'extérieur de ladite pièce et un deuxième orifice de sortie (13) pour l'évacuation de l'air vers l'extérieur de la pièce sont formés côte à côte dans une direction droite-gauche ; une plaque latérale gauche (6) dans laquelle une ouverture (16) est formée à son centre ; un élément de couvercle (58) pour fermer ladite ouverture (16) de manière à pouvoir l'ouvrir et la fermer ; une plaque latérale droite (7) ; et une plaque supérieure (8) ;
une unité de soufflage (17) pour l'amenée de l'air disposée au voisinage dudit premier orifice de sortie (9) de telle sorte que l'air est évacué dudit premier orifice de sortie (9) ;
une unité de soufflage (18) pour l'évacuation d'air disposée au voisinage dudit deuxième orifice de sortie (13) de telle sorte que l'air est évacué dudit deuxième orifice de sortie (13) ;
un premier élément de zonage (28), disposé au voisinage dudit premier orifice d'admission (10) pour diviser l'intérieur dudit boîtier d'unité (2) de telle sorte que l'air aspiré dudit premier orifice d'admission (10) est mené vers ladite unité de soufflage d'évacuation d'air (18) pendant que l'air aspiré dudit deuxième orifice d'admission (14) est mené vers ladite unité de soufflage d'amenée d'air (17) ;
un deuxième élément de zonage (29), disposé au voisinage dudit deuxième orifice d'admission (14), pour diviser l'intérieur dudit boîtier d'unité (2) de telle sorte que l'air aspiré dudit deuxième orifice d'admission (14) est mené vers ladite unité de soufflage d'amenée d'air (17) tandis que l'air aspiré dudit premier orifice d'admission (10) est mené vers ladite unité de soufflage d'échappement d'air (18) ;
un premier élément d'écartement (26) interposé entre ladite unité de soufflage (17) de l'air d'amenée et ladite plaque latérale gauche (6) ;
un deuxième élément d'écartement (27) interposé entre ladite unité de soufflage (18) de l'air d'échappement et ladite plaque latérale droite (7) ;
des rails de guidage (48, 48) qui sont positionnés au centre longitudinal de ladite plaque inférieure (3) dudit boîtier d'unité (2) et au centre longitudinal de ladite plaque supérieure (8) dudit boîtier d'unité (2), respectivement, et qui s'étendent chacun dans une direction droite-gauche ;
un rail de guidage avant (48) qui est monté sur l'arrière de ladite unité de soufflage (17) de l'air d'amenée et ledit premier élément de zonage (28) et qui s'étend dans une direction droite-gauche ;
un rail de guidage arrière (48) qui est monté sur l'avant de ladite unité de soufflage (18) de l'air d'échappement et ledit deuxième élément de zonage (29) et qui s'étend dans une direction droite-gauche ;
un élément d'échange de chaleur (15), monté amoviblement sur chaque rail de guidage (48, 48) de manière à être interposé entre ladite unité de soufflage (17) de l'air d'amenée et ledit deuxième élément de zonage (29) et entre ladite unité de soufflage (18) de l'air d'échappement et ledit premier élément de zonage (28) pour effectuer un échange de chaleur entre l'air intérieur (101) aspiré dudit premier orifice d'admission (10) et l'air extérieur (102) aspiré dudit deuxième orifice d'admission (14) ;
un élément de sélection de passage (36) comprenant un passage de contournement (37) pour permettre audit air intérieur (101) aspiré dudit premier orifice d'admission (10) de contourner ledit élément d'échange de chaleur (15), et un amortisseur (39) pour choisir, comme passage pour ledit air intérieur (101), entre un passage (32) passant à travers ledit élément d'échange de chaleur (15) et ledit passage de contournement (37) ; et
une boîte d'appareils électriques (54) positionnée à l'extérieur dudit boîtier d'unité (2) ;
dans lequel, dans ledit procédé de fabrication de l'appareil de ventilation :
ladite plaque inférieure (3), ladite plaque latérale frontale (4), ladite plaque latérale arrière (5), ladite plaque latérale gauche (6) et ladite plaque latérale droite (7) sont assemblées ;
ensuite, ledit élément de sélection de passage (36) est monté ;
ensuite, ledit premier élément d'écartement (26) et ledit deuxième élément d'écartement (27) sont montés ;
ensuite, ladite unité de soufflage (17) de l'air d'amenée et ladite unité de soufflage (18) de l'air d'évacuation sont montées ;
ensuite, ledit premier élément de zonage (28) et ledit deuxième élément de zonage (29) sont montés ;
ensuite, ledit rail de guidage (48) est fixé à ladite plaque inférieure (3) tandis que ledit rail de guidage avant (48) et ledit rail de guidage arrière (48) sont montés ;
ensuite, les deux unités de soufflage précitées (17, 18) et ladite boîte d'appareils électriques (54) sont connectées par un câble (55) ;
ensuite, ledit élément d'échange de chaleur (15) est inséré à travers une ouverture (16) formée dans ladite plaque latérale gauche (6) le long de chaque rail de guidage (48) ; et
ensuite, ladite plaque de dessus (8) est fixée.
